# EUROPEAN PATENT SPECIFICATION

(11) **EP 3 680 080 B1**
(45) Date of publication and mention of the grant of the patent: **09.11.2022**
(21) Application number: 20151230.8
(22) Date of filing: 10.01.2020
(51) Int. Cl.: B28C 5/42, B60L 58/18, B60P 3/16, H02J 7/00, B60L 1/00, B60L 50/60, H02J 7/34

(54) **CEMENT TRUCK**
ZEMENTWAGEN
CAMION-TOUPIE

(30) Priority: 10.01.2019 IT 201900000412
(43) Date of publication of application: 15.07.2020
(73) Proprietor: CIFA SpA, 20030 Senago (MI) (IT)
(72) Inventor: Pirri, Nicola, 20146 Milano (IT); Maini, Paolo Dario, 20851 Lissone (IT)
(74) Representative: Petraz, Gilberto Luigi

(56) References cited:
- WO-A1-2009/069480
- WO-A1-2012/169023
- CN-A- 106 553 269
- GB-A- 2 550 955

## Description

### FIELD OF THE INVENTION

The invention concerns a cement truck provided with electric drive systems and a control system able to monitor and manage said electric drive systems.

### BACKGROUND OF THE INVENTION

The use of cement trucks is known which, using a rotating drum, transport the concrete from a production plant to the construction site where the concrete is used.

Both during the loading step in the production plant and also during the transport step to the construction site, the concrete has to be kept malleable, and therefore the rotating drum must be kept in constant rotation so as not to cause the concrete to harden.

It is also known that, upon arrival at the construction site, the cement truck sometimes has to wait its turn for the unloading step. In this waiting step too, the drum must be kept in constant rotation, for the reasons indicated above.

It is also known that, before the unloading step, the concrete undergoes a homogenization step, and to obtain this, the drum of the cement truck is made to rotate at the maximum rotation speed.

It is also known that, during the unloading step of the concrete, the drum is made to rotate in the opposite direction to the mixing direction, to allow the concrete to come out.

Cement trucks are known in which the rotation of the drum is obtained by means of a hydraulic motor, which is driven by a group of pumps made to rotate by a heat engine which is usually a diesel engine. The heat engine can also be the same one that moves the vehicle, or it can be an independent auxiliary heat engine.

A solution is also known, for example from documents JP-A-2003/226192, JP-A-2003/301802, and from document DE-U-20 2009 001416, whereby the rotating drum of the cement truck is driven by means of an electric motor.

In particular, document JP-A-2003/226192 describes a cement truck provided with a rotating drum connected directly, by means of reduction members, to the electric motor. Depending on the functioning conditions, the electric motor is powered either by an electric power generator driven directly by the heat engine of the cement truck, or by electricity storage batteries.

Other documents relating to cement trucks provided with an electric motor are for example JP-A-2003/301802 and DE-U-20 2009 001416.

Cement trucks are also known, for example described in the international patent application filed by the Applicant on 25.01.2013 under the number PCT/IB2013/000091 (PCT'091), published as WO2013/111022 A1, in which it is possible to move the rotating drum by means of an auxiliary device comprising an electric motor connected to the drum itself. In particular, this solution provides to rotate the drum with accumulated energy transformed into high efficiency electric energy, with high electric performance, and guarantees considerable operational practicality and flexibility.

Furthermore, from the patent document number WO2014132208 in the name of the same Applicant, hybrid cement trucks are known in which a traditional motor powers the vehicle while an electric motor equipped with an auxiliary electromechanical device makes the rotating drum rotate.

Therefore there are solutions known in the state of the art that describe hybrid type cement trucks, that is, provided with an electric motor to drive the rotating drum, and a traditional engine, normally a diesel heat engine, to drive the vehicle.

These solutions advantageously allow, compared to those with a drum powered traditionally, to contain the noise of the cement truck and to reduce both the fuel consumption, for example diesel, and also the polluting emissions, for example carbon dioxide (CO₂) and particulates, as well as nitrogen oxides and mixtures thereof (NOX).

However, they still maintain the disadvantages connected to the use of the traditional motor to drive the vehicle.

In particular, the traditional motor is noisy and polluting, both from the point of view of diesel consumption and also from the point of view of polluting emissions into the atmosphere, such as carbon dioxide, particulates and nitrogen oxides. This problem is greater if the cement truck has to stay on site for long periods with the engine running.

In addition, some hybrid solutions could provide that the traditional motor can recharge the battery pack of the electric motor, and in these cases the noise and pollution produced by the traditional motor would be much greater.

CN106553269 discloses a cement truck comprising a vehicle provided with a motor and an electric battery, as well as a drum provided with a corresponding electric motor. The cement truck also comprises a second electric motor connected to the rear axle of the vehicle. Both electric motors are electrically connected to the battery of the vehicle. A

The purpose of the present invention is therefore to develop a solution able at least to reduce the drawbacks and disadvantages of the prior art as described heretofore.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the invention or variants to the main inventive idea.

The present invention concerns a cement truck comprising a motor vehicle and a drum kit connected through connection means. The motor vehicle comprises a vehicle and at least a first drive system to drive the vehicle, while the drum kit comprises a rotating drum and at least a second drive system to drive the rotating drum.

The connection means comprise at least electric connection means.

The cement truck of the present invention provides that both the first drive system to drive the vehicle and the second drive system to drive the rotating drum are of the electric type. The first drive system comprises at least a first battery kit, and the second drive system comprises at least a second battery kit.

Moreover, according to the present invention, the electric connection means comprise at least one connection circuit that connects the electric drive system of the vehicle and the electric drive system of the rotating drum to each other.

According to the present invention there is also a control system configured to monitor the functioning of the first and second electric drive systems and to manage the energy flows between the first and the second electric drive system, and by which the first and the second electric drive system are governed. In particular, the first and second battery kits are connected to each other through the connection circuit, and the control system is configured to regulate the energy flows from the first battery kit to the second battery kit in order to recharge the second battery kit using the voltage of the first battery kit, and vice versa.

The use of an electric drive system both to move the vehicle and also to move the drum determine considerable advantages in terms of both noise and pollution reduction caused by the functioning of the cement truck, in particular during activity on construction sites inside towns or close proximity to them.

The presence of a common control system that manages and coordinates the functioning of the two electric drive systems allows to monitor the corresponding consumption and levels of autonomy, allowing to prevent interruptions to work and allowing to program recharging operations without interrupting the activities provided by the specific operating program.

### ILLUSTRATION OF THE DRAWINGS

These and other characteristics of the present invention will become apparent from the following description of some embodiments, given as a non-restrictive example with reference to the attached drawings wherein:
- fig. 1 is a simplified representation of the cement truck of the present invention;
- fig. 2 is a schematic representation of one embodiment of the cement truck of the present invention;
- fig. 3 is a schematic representation of an alternative embodiment of the cement truck of the present invention;
- fig. 4 is a schematic representation of functioning configurations of the cement truck of the present invention according to the embodiment of fig. 2;
- fig. 5 is a schematic representation of functioning configurations of the cement truck of the present invention according to the embodiment of fig. 3.

To facilitate comprehension, the same reference numbers have been used, where possible, to identify identical common elements in the drawings. It is understood that elements and characteristics of one embodiment can conveniently be incorporated into other embodiments without further clarifications.

### DESCRIPTION OF EMBODIMENTS

We will now refer in detail to the various embodiments of the present invention, of which one or more examples are shown in the attached drawings. Each example is supplied by way of illustration of the invention and shall not be understood as a limitation thereof. For example, the characteristics shown or described insomuch as they are part of one embodiment can be adopted on, or in association with, other embodiments to produce another embodiment. It is understood that the present invention shall include all such modifications and variants without departing from the scope of the appended claims.

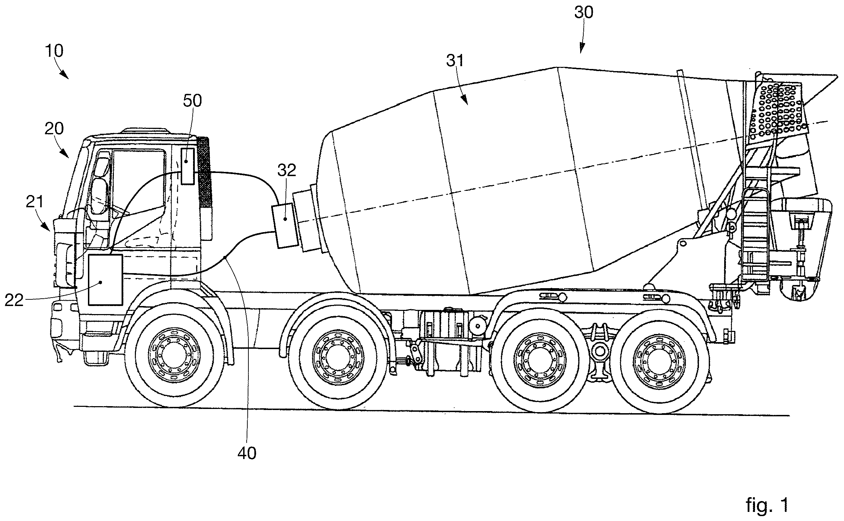

With reference to fig. 1, the present invention concerns a cement truck 10 consisting of a vehicle 20 and a drum kit 30, connected to each other through connection means, which comprise at least electric connection means 40.

The vehicle 10 comprises a vehicle 21 and at least a first drive system 22. The first drive system 22 is a first drive system 22 of the electric type, for example an electric motor.

The drum kit 30 is mounted on a bed of the vehicle 21 in a conventional manner, and is known to a person of skill in the art, so that detailed descriptions on these aspects will be omitted in the description that follows. Its operation for the steps of loading and unloading the concrete is also taken as known here and not further described.

Advantageously, compared to the state of the art in which the vehicle 21 is driven by a conventional heat engine, the use of an electric motor also to move the vehicle 21 allows to reduce pollution, consumption and noise compared to conventional vehicles, both in the running step and also in the maneuvering and work steps on the construction site.

The drum kit 30 comprises a rotating drum 31 and at least a second drive system 32. The second drive system 32 is a second drive system 32 of the electric type, for example a second electric motor, with optimized power, sizes and characteristics to drive the rotating drum 31.

The said drive systems 22 and 32 are connected to each other at least by electric connection means 40.

Advantageously, the electric connection means 40 allow to activate flows, therefore exchanges, of energy between the first 22 and the second 32 electric drive system, allowing to optimize functioning autonomy according to the different work and running needs.

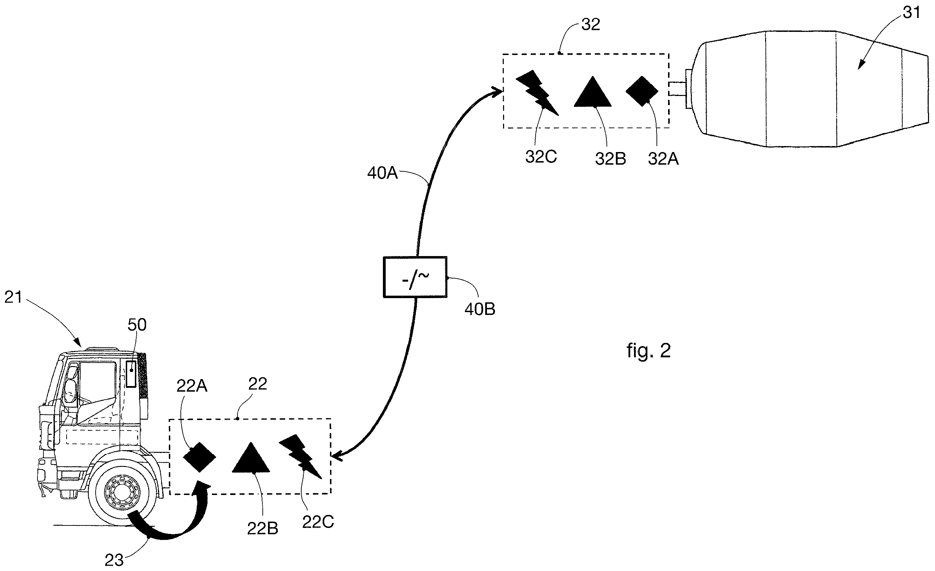

In the embodiment shown in fig. 2, according to the invention the first drive system 22 comprises at least a first electric motor 22A, a first inverter 22B and a first battery kit 22C.

During functioning, the first battery kit 22C powers the first electric motor 22A through the first inverter 22B.

Furthermore, the second drive system 32 comprises at least a second electric motor 32A, a second inverter 32B and a second battery kit 32C.

During functioning, the second battery kit 32C powers the second electric motor 32A through the second inverter 32B.

According to the invention, the electric connection means 40 comprise at least one connection circuit 40A which connects the first battery kit 22C with the second battery kit 32C.

It is therefore possible to activate current flows that can recharge one of the battery kits at the expense of the other, according to requirements.

In particular, according to the invention, a control system 50, described below in more detail, detects continuously, or according to pre-defined periodic intervals, the charge level of the two battery kits 22C, 32C, in relation to the preestablished operating program of the activities of the cement truck 10.

The control system 50 is therefore suitable to selectively activate energy exchanges from the first battery kit 22C to the second battery kit 32C and/or from the second battery kit 32C to the first battery kit 22C.

This can allow to ensure the completion of the activities of the cement truck 10, for example a movement, a mixing step, a loading/unloading step, and so on.

In one embodiment of the present invention, such as that shown in fig. 2, the first battery kit 22C and the second battery kit 32C have different working voltages and the electric connection means 40 also comprise a DC/DC converter 40B.

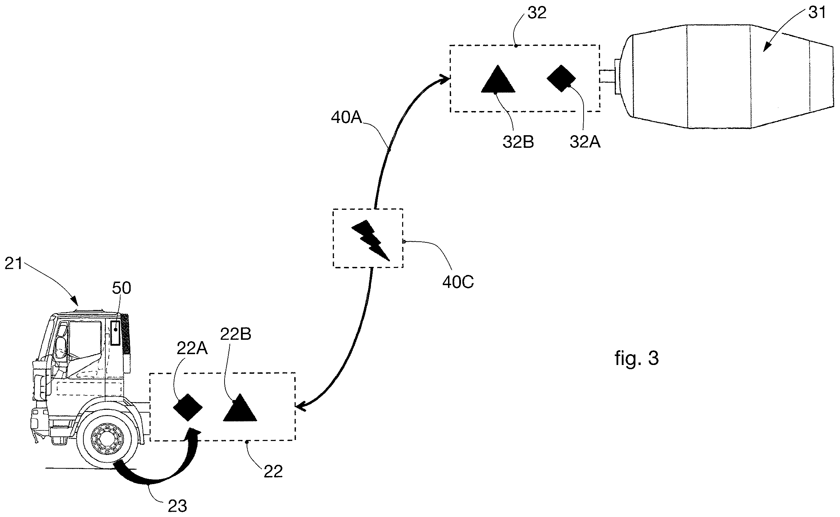

In the embodiment of the present invention shown in fig. 3, the first drive system 22 comprises at least a first electric motor 22A and a first inverter 22B.

Furthermore, the second drive system 32 comprises at least a second electric motor 32A and a second inverter 32B.

The electric connection means 40 comprise at least one battery kit 40C and a connection circuit 40A, which connects the first inverter 22B and the second inverter 32B.

During functioning, the battery kit 40C can power, through the connection circuit 40A, both the first electric motor 22A, through the first inverter 22B, and also the second electric motor 32A, through the second inverter 32B.

In this embodiment it is therefore possible to activate current flows which can power one or both of the drive systems 22, 32, according to requirements.

A first advantage of this configuration, compared both to the previous solution with two battery kits shown in fig. 2, and also to the solutions of the state of the art, is that it allows to optimize all the components of the cement truck 10 from an electrical point of view, since the drive systems 22, 32 work with the same battery kit 40C and therefore at the same voltage.

A second advantage of this configuration, compared both to the previous solution with two battery kits shown in fig. 2, and also to the solutions of the state of the art, is that it allows to optimize the components of the cement truck 10 from a layout point of view, allowing to reduce the spaces occupied by said components in the reduced space of the cement truck 10.

It is understood that by connection circuit 40A we mean any form of connection, of any type, able to make electric current pass in a bidirectional manner.

It should also be understood that it is not necessary for the connection circuit 40A to connect directly and singly only the components shown by way of example in fig. 2 and fig 3. In fact, the electric connection can also be indirect, due to the presence of other intermediate components not shown here, and/or the fact that the connection circuit 40A can also connect other components, while maintaining its function of electrically connecting the two drive systems 22, 32.

In some embodiments of the present invention, the vehicle 20 also comprises a Kinetic Energy Recovery System, or KERS, called KERS system 23 below.

In the case shown here, the KERS system 23 is able to recover energy from the first electric motor 22A and introduce it into the first drive system 22.

Furthermore, the electric connection means 40 of the present invention allow, possibly, according to requirements, to introduce the energy recovered by the KERS system 23 both into the first drive system 22 and also into the second drive system 32.

In particular, in the embodiment of the present invention shown in fig. 2, the energy recovered by the KERS system 23 is stored in the first battery kit 22C, and the electric connection means 40 allow, if necessary, to transfer it to the second battery kit 32C.

According to an alternative embodiment of the present invention, the KERS system 23 can be directly connected to the second drive system 32. In this embodiment, the energy recovered by the KERS system 23 can be stored in the second battery kit 32C, without passing through the first battery kit 22C.

In a further embodiment of the present invention, the KERS system 23 can be connected to both the first and second battery kits 22C, 32C.

In the embodiment of the present invention shown in fig. 3, the energy recovered by the KERS system 23 is stored in the battery kit 40C, and the electric connection means 40 allow, if necessary, to use it to drive one or both of the drive systems 22, 32.

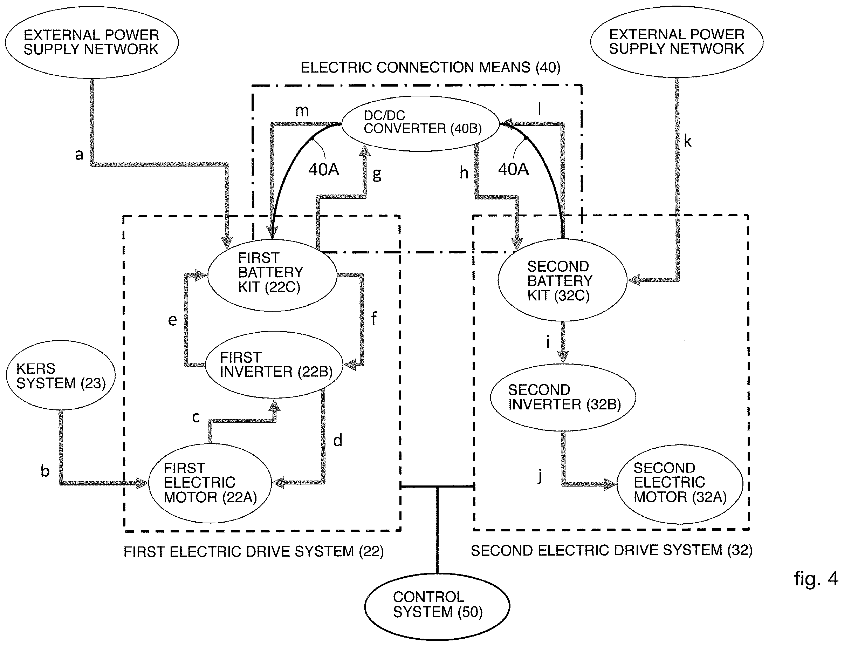

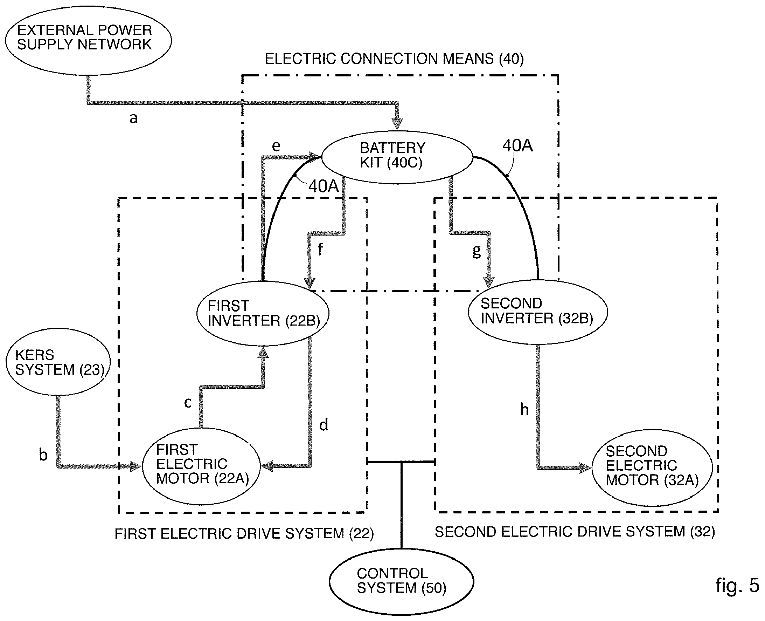

With reference to figs. 4 and 5, some possible functioning configurations of some embodiments of the cement truck 10 of the present invention are described.

The blocks that represent the main components of the cement truck as described above are connected to each other by arrows that represent the exchange of electric energy between one block and another. The direction of the arrow represents the exchange direction between one block and another. The arrows have been indicated with the lower case letters of the alphabet for clearer identification.

The components of the first and second drive systems 22, 32 have been enclosed in boxes drawn with lines, while the components of the electric connection means 40 have been enclosed in a box drawn with lines and dots.

Fig. 4 shows some possible functioning configurations of the embodiment of the cement truck 10 of the present invention shown in fig. 2, which provides two battery kits 22C, 32C and one DC/DC converter 40B.

For example, the functioning configuration of the cement truck 10 of the present invention during transport with the drum kit 30 stationary provides that at least the energy flows f, d be active.

The functioning configuration of the cement truck 10 of the present invention during transport, with the drum kit 30 in motion, provides instead that at least the energy flows f, d, i, j are active.

A functioning configuration of the cement truck 10 can also be provided in which the first battery kit 22C is used both to move the vehicle 20 and also the drum kit 30. This configuration provides that at least the energy flows d, f, g, h, i and j are active. This can happen, for example, when the second battery kit 32C is flat or almost flat, to such a level that the control system 50 activates the first battery kit 22C to move the drum kit 30, at least to complete the activity in progress.

Furthermore, a functioning configuration can also be provided in which the first battery kit 22C recharges the second battery kit 32C, activating at least the flows g, h.

In one embodiment of the present invention it is also possible that the second battery kit 32C recharges the first battery kit 22C, activating at least the energy flows 1, m.

A functioning configuration of the cement truck 10 can also be provided in which the energy recovered by the KERS system 23 is used to recharge the first battery kit 22C, while the first battery kit 22C is used to power the drum kit 30. This configuration provides that at least the energy flows b, c, e, g, h, i, j are active.

The present invention can also provide a functioning configuration of the cement truck 10 in which the energy recovered by the KERS system 23 is used to recharge the second battery kit 32C. This configuration provides that at least the energy flows b, c, e, g, h are active.

For example, the functioning configuration of the cement truck 10 of the present invention while working on the construction site, with the drum kit 30 in motion and the vehicle 20 stationary, provides that at least the energy flows i, j are active.

The present invention can also provide a functioning configuration of the cement truck 10 in which the first battery kit 22C is used to move the drum kit 30, while the vehicle 20 is stationary. This configuration provides that at least the energy flows g, h, i, j are active.

The present invention can also provide a functioning configuration of the cement truck 10 in which the drum kit 30 is moved by the second battery kit 32C while the second battery kit 32C is connected to an electric supply network. This configuration provides that at least the energy flows k, i, j are active.

The present invention can also provide a functioning configuration of the cement truck 10 in which the drum kit 30 is moved by the first battery kit 22C, for example by means of a direct connection (not shown in the drawings) with the second inverter 32B, or through the second battery kit 32C, while the first battery kit 22C is connected to an electric power supply network for recharging. This configuration provides that at least the energy flows a, g, h, i, j are active.

Furthermore, when the cement truck 10 according to the present invention is stationary on site, it is possible to connect both the battery kits 22C, 32C to an electric power supply network in order to recharge them, activating at least the energy flows a, e, k, and to move the drum kit 30 using the first battery kit 22C, activating at least the energy flows g, h, i, j, and/or the second battery kit 32C, activating at least the energy flows i, j.

In the embodiments in which the first and second battery kits 22C, 32C work at the same voltage, the electric connection means 40 may not comprise the DC/DC converter 40B. This obviously must not be understood as a limitation to the functioning configurations, which on the contrary are advantageously simplified. In fact, in these embodiments all, and not only, the previous functioning configurations are still possible.

Furthermore, it is also possible to provide further variants of the present invention in which the components of the first and second drive systems 22, 32 are connected directly to each other and/or with electric layouts other than those shown by way of example in figs. 1, 2, 3, 4 and 5.

For example, as already stated above, a direct connection can be provided between the first battery kit 22C and the second inverter 32B in order to drive the drum kit 30.

Furthermore, another variant of the present invention is the addition of a direct connection between the second battery kit 32C and the first inverter 22B, for example to supply additional power to the first electric motor 22A, if necessary.

Fig. 5 shows some possible functioning configurations of an embodiment of the cement truck 10 of the present invention which provides a battery kit 40C.

One functioning configuration, corresponding to the vehicle 20 in motion and the drum kit 30 stationary, provides for example that at least the energy flows d, f are active.

Similarly, one functioning configuration, corresponding to the vehicle 20 stationary and the drum kit 30 in motion, provides that at least the energy flows g, h are active.

According to another example, the functioning configuration, corresponding to the vehicle 20 in motion and the drum kit 30 in motion, provides that at least the energy flows d, f, g, h are active.

It is also possible to provide a functioning configuration in which the KERS system 23 of the vehicle 20 recharges the battery kit 40C during transport. This configuration provides that at least the energy flows b, c, e are active.

A further functioning configuration provided by the present invention is that in which the KERS system 23 recharges the battery kit 40C during transport while the drum kit 30 is in motion. This configuration provides that at least the energy flows b, c, e, g, h are active.

It is also possible to provide functioning configurations in which the vehicle 20 is stationary and the battery kit 40C is recharged by means of an external power supply while the drum kit 30 is in motion. This configuration provides that at least the energy flows a, g, h are active.

It is obvious that the functioning configurations described here are provided by way of example only, and that many other functioning configurations are possible, or easily imaginable, by combining the energy flows shown in figs. 4 and 5, which fall within the field of protection of the present invention.

In one embodiment of the present invention, the cement truck 10 also includes a control system 50 suitable and configured to monitor the functioning status of the components of the cement truck 10.

In particular, the control system 50 is able to monitor the functioning status of the KERS system 23, of the first electric drive system 22, of the second electric drive system 32 and of the electric connection means 40.

In one embodiment of the present invention, the cyclically programmed activities of the cement truck 10 are stored in the control system 50, for example displacements, mixing cycles, loading/unloading operations, and so on. The control system 50, by cyclically or continuously monitoring the energy level of the battery packs 22C and 32C, is able to manage these activities by indicating whether the autonomy of the electric motors allows the complete execution thereof or, if necessary, the exchange of energy between the two battery packs. In the event that the autonomy levels do not allow the completion of the activities, the control system 50 signals the need to recharge before the start of a new activity which, subsequently, it is not appropriate to interrupt.

Sais control system 50 is also able to manage the functioning of the components of the cement truck 10, and in particular of the KERS system 23, of the first electric drive system 22, of the second electric drive system 32 and of the electric connection means 40.

With reference to figs. 4 and 5, the control system 50 is able to monitor and manage the energy flows between the various components of the cement truck 10, activating and deactivating them as required.

For example, with particular reference to the embodiment with two battery kits shown in figs. 2 and 4, when the charge level of the second battery kit 32C drops below a programmed value, for example, below 30%, the control system 50 can activate a flow of current from the first battery kit 22C to the second battery kit 32C in order to recharge the second battery kit 32C.

In one embodiment of the present invention, when the charge level of the second battery kit 32C falls below a programmed value, for example, below 30%, and the charge level of the first battery kit 22C is above another programmed value, for example, above 50%, the control system 50 can activate a flow of current from the first battery kit 22C to the second battery kit 32C in order to recharge the second battery kit 32C.

Advantageously, compared to the cement trucks known in the state of the art, this allows to increase the functioning autonomy of the drum kit 30 and to better face unexpected events and/or prolonged work steps on the construction site.

Furthermore, when the rotating drum 31 is running and the vehicle 21 is stationary, if the charge level of the second battery kit 32C is lower than a programmed value, for example 40%, and the charge level of the first battery kit 22C it is not less than a further programmed value, for example 60%, the control system 50 can activate a flow of current from the first battery kit 22C to the second battery kit 32C in order to recharge the second battery kit 32C.

Advantageously, compared to cement trucks known in the state of the art, this allows to optimize the performance of the cement truck 10 by directing the energy toward the components that are most used.

Furthermore, when the first battery kit 22C is connected to an external electric power network to be recharged, if the charge level of the first battery kit 22C is higher than a programmed value, for example 80%, the control system 50 can activate a flow of current from the first battery kit 22C to the second battery kit 32C to recharge the second battery kit 32C.

Advantageously, compared to cement trucks known in the state of the art, this allows to better distribute the power supply to the components that need it most.

Furthermore, in one example embodiment, when the first and second battery kits 22C, 32C are connected to an external electric power network to be recharged, if the charge level of the first battery kit 22C is higher than a programmed value, for example higher than 60%, and the charge level of the second battery kit 32C is lower than a further programmed value, for example lower than 40%, the control system 50 can activate a flow of current from the first battery kit 22C to the second battery kit 32C in order to recharge the second battery kit 32C.

Advantageously, compared to cement trucks known in the state of the art, this allows to better distribute the power supply to the components that need it most.

In one embodiment of the present invention, it is also possible to use one of the two battery kits 22C, 32C to supply a reserve of power to the other, in case of exceptional performance, in which it is necessary to supply energy in addition to the maximum permitted nominal levels.

In particular, if in exceptional cases the consumption of current for moving the drum kit 30 requires that the current supplied by the second battery kit 32C exceeds, for example, 95% of a programmed value, for a predetermined time interval, for example more than 30 seconds, the control system 50 can activate a flow of current from the first battery kit 22C to the second battery kit 32C in order to recharge the second battery kit 32C.

Advantageously, compared to cement trucks known in the state of the art, this allows to obtain considerable performances, reducing the critical aspects and problems deriving from use on site outside the nominal functioning modes.

Furthermore, during the KERS steps, the control system 50 can activate a flow of current from the first battery kit 22C to the second battery kit 32C to recharge the second battery kit 32C, if the charge level of the first battery kit 22C is higher than a programmed value, for example higher than 70%, and the rotating drum 31 is operating.

Furthermore, during the KERS steps, the control system 50 can activate a flow of current from the first battery kit 22C to the second battery kit 32C to recharge the second battery kit 32C, if the charge level of the first battery kit 22C is higher than a programmed value, for example higher than 80%, and the rotating drum 31 is stationary.

Advantageously, compared to cement trucks known in the state of the art, this allows to make the best use of all the energy sources available to the cement truck 10 of the present invention, increasing its autonomy and performance.

In the embodiment of the present invention shown in fig. 5, in which there is only one battery kit 40C, the control system 50 can regulate the energy flow to and from the various components of the cement truck 10, as required.

For example, this can be advantageous if the functioning configuration is active in which both the vehicle 20 and the drum kit 30 are in motion, both powered by the battery kit 40C (see flows d, f, h, g shown in fig. 5).

If more power is required to move the vehicle 20, for example in the case of particularly steep climbs, the control system 50 can increase the energy flow toward the vehicle 20 (flows d, f in fig. 5 ), reducing the energy flow toward the drum kit 30 (flows g, h in fig. 5).

On the contrary, if more power is required to move the drum kit 30, the control system 50 can increase the energy flow toward the drum kit 30 (flows g, h in fig. 5), at the expense of the vehicle 20 (flows d, f in fig. 5).

In embodiments which comprise the KERS, it is also provided that the additional power produced by the KERS system 23 of the first drive system 22 is directed by the control system 50 toward the vehicle 20 and/or toward the drum kit 30, according to requirements (see flows b, c, d, e, f, g, h in fig. 5).

For example, if the vehicle 20 brakes when going uphill, the control system 50 can detect the need for a greater flow of current toward the first drive system 22, necessary for restarting. In this case the control system 50 can use the energy recovered by the KERS system 23 to increase the energy flow to the first drive system 22 (flows f, d in fig. 5), facilitating the restarting.

In one embodiment it is also provided that the control system 50 directs the energy recovered by the KERS system 23 to recharge the battery kit 40C, without modifying the energy flows to vehicle 20 and drum kit 30 (see flows b, c, and e in fig. 5).

For example, this can be useful if the vehicle 20 brakes when going downhill.

The present invention therefore allows to overcome, or at least limit, the problems related to the functioning of electric cement trucks, in particular linked to the exhaustion of the batteries of the motor vehicle 20 and the drum kit 30 during prolonged movements and/or during prolonged use of the cement mixer.

Furthermore, the cement truck 10 of the present invention, provided exclusively with drive systems 22, 32 of the electric type, will be less noisy and less polluting than the cement trucks known in the state of the art, provided with traditional or hybrid drive systems, while maintaining characteristics of extreme efficiency, versatility and operational continuity.

It is clear that modifications and/or additions of parts may be made to the cement truck with electric control system as described heretofore, without departing from the field and scope of the present invention as defined by the appended claims.

It is also clear that, although the present invention has been described with reference to some specific examples, a person of skill in the art shall certainly be able to achieve many other equivalent forms of cement truck with electric control system, having the characteristics as set forth in the claims and hence all coming within the field of protection defined thereby.

## Claims

1. Cement truck (10) comprising a motor vehicle (20) and a drum kit (30) connected through connection means; wherein
- said motor vehicle (20) comprises a vehicle (21) and at least a first drive system (22) to drive the vehicle (21);
- said drum kit (30) comprises a rotating drum (31) and at least a second drive system (32) to drive the rotating drum (31);
- said connection means comprise at least electric connection means (40); wherein
- the first drive system (22) of the vehicle (21) is a first electric drive system (22) comprising at least a first battery kit (22C);
- the second drive system (32) of the rotating drum (31) is a second electric drive system (32) comprising at least a second battery kit (32C);
- the electric connection means (40) comprise at least one connection circuit (40A) which connects the first and the second electric drive system (22, 32);
said cement truck (10) also comprising at least one control system (50) configured to monitor the functioning of the first and second electric drive systems (22, 32) and to manage the energy flows between the first and the second electric drive system (22, 32), and by which the first and the second electric drive system (22, 32) are governed;
wherein the first and second battery kits (22C, 32C) are connected to each other through the connection circuit (40A), and the control system (50) is configured to regulate the energy flows from the first battery kit (22C) to the second battery kit (32C) in order to recharge the second battery kit (32C) using the voltage of the first battery kit (22C), and vice versa.

2. Cement truck (10) as in claim 1, wherein the working voltages of the first and second battery kits (22C, 32C) are different from each other, and the electric connection means (40) comprise at least one DC/DC converter (40B).

3. Cement truck (10) as in claim 1, wherein the electric connection means (40) comprise at least one battery kit (40C) which can power the first electric drive system (22) and/or the second electric drive system (32).

4. Cement truck as in any claim from 1 to 3, wherein there is a KERS system (23), and wherein the control system (50) is configured to distribute the energy obtained by the KERS to one and/or the other of said electric drive systems (22, 32).

5. Method to control the functioning of a cement truck (10) comprising a motor vehicle (20) and a drum kit (30) connected through connection means; wherein said motor vehicle (20) comprises a vehicle (21) and at least a first drive system (22) to drive the vehicle (21);
- said drum kit (30) comprises a rotating drum (31) and at least a second drive system (32) to drive the rotating drum (31);
- said connection means comprise at least electric connection means (40); wherein it provides that
- the first drive system (22) of the vehicle (21) is a first electric drive system (22) comprising at least a first battery kit (22C);
- the second drive system (32) of the rotating drum (31) is a second electric drive system (32) comprising at least a second battery kit (32C);
- the electric connection means (40) comprise at least one connection circuit (40A) that connects the first and the second electric drive system (22, 32) and that a control system (50) monitors and manages the energy flows between the first and the second electric drive systems (22, 32);
wherein the first and second battery kits (22C, 32C) are connected to each other through the connection circuit (40A);
**and** wherein the control system (50) regulates and monitors the energy flows from the first battery kit (22C) to the second battery kit (32C), recharging the second battery kit (32C) using the voltage of the first battery kit (22C), and vice versa.

6. Method as in claim 5, wherein the control system (50) activates a flow of current from the first battery kit (22C) to the second battery kit (32C) to recharge the second battery kit (32C), when the charge level of the second battery kit (32C) goes below a programmed value.

7. Method as in claim 5, wherein the control system (50) activates a flow of current from the second battery kit (32C) to the first battery kit (22C) to recharge the first battery kit (22C), when the charge level of the first battery kit (22C) goes below a programmed value.

8. Method as in claim 5, wherein the control system (50) activates a flow of current from the first battery kit (22C) to the second battery kit (32C) to recharge the second battery kit (32C) if the charge level of the second battery kit (32C) is lower than a programmed value, for example lower than 40%, and the charge level of the first battery kit (22C) is not lower than a programmed value, for example not less than 60%, when the rotating drum (31) is functioning and the vehicle (21) is stationary.

9. Method as in claim 5, wherein the control system (50) activates a flow of current from the first battery kit (22C) to the second battery kit (32C) to recharge the second battery kit (32C) if the charge level of the first battery kit (22C) is higher than a programmed value, for example higher than 80%, when the first battery kit (22C) is connected to an external power supply network in order to be recharged.

10. Method as in claim 5, wherein the control system (50) activates a flow of current from the first battery kit (22C) to the second battery kit (32C) to recharge the second battery kit (32C) if the charge level of the first battery kit (22C) is higher than a programmed value, for example higher than 60%, and the charge level of the second battery kit (32C) is lower than another programmed value, for example at 40%, when the first and the second battery kits (22C, 32C) are connected to an external power supply network in order to be recharged.

11. Method as in claim 5, wherein the control system (50) activates a flow of current from the first battery kit (22C) to the second battery kit (32C) to recharge the second battery kit (32C) if the maximum value of the current supplied by the second battery kit (32C) exceeds 95% of a programmed value, for a predetermined time interval, for example longer than 30 seconds.

12. Method as in claim 5, for a cement truck (10) comprising a KERS system (23), wherein during the KERS steps the control system (50) activates a flow of current from the first battery kit (22C) to the second battery kit (32C) to recharge the second battery kit (32C), if the charge level of the first battery kit (22C) is higher than a programmed value, for example higher than 70%, and the rotating drum (31) is functioning.

13. Method as in claim 5, for a cement truck (10) comprising a KERS system (23), wherein during the KERS steps the control system (50) activates a flow of current from the first battery kit (22C) to the second battery kit (32C) to recharge the second battery kit (32C), if the charge level of the first battery kit (22C) is higher than a programmed value, for example higher than 80%, and the rotating drum (31) is stationary.

## Patentansprüche

1. Zementlastwagen (10), der ein Kraftfahrzeug (20) und eine Trommeleinrichtung (30), die durch Verbindungsmittel verbunden sind, umfasst; wobei
- das Kraftfahrzeug (20) ein Fahrzeug (21) und mindestens ein erstes Antriebssystem (22) zum Antreiben des Fahrzeugs (21) umfasst;
- die Trommeleinrichtung (30) eine rotierende Trommel (31) und mindestens ein zweites Antriebssystem (32) zum Antreiben der rotierenden Trommel (31) umfasst;
- die Verbindungsmittel mindestens ein elektrisches Verbindungsmittel (40) umfassen; wobei
- das erste Antriebssystem (22) des Fahrzeugs (21) ein erstes Elektroantriebssystem (22) ist, das mindestens einen ersten Batteriesatz (22C) umfasst;
- das zweite Antriebssystem (32) der rotierenden Trommel (31) ein zweites Elektroantriebssystem (32) ist, das mindestens einen zweiten Batteriesatz (32C) umfasst;
- die elektrischen Verbindungsmittel (40) mindestens eine Verbindungsschaltung (40A) umfassen, die das erste und das zweite Elektroantriebssystem (22, 32) verbindet;
wobei der Zementlastwagen (10) auch mindestens ein Steuersystem (50) umfasst, das dazu konfiguriert ist, den Betrieb des ersten und des zweiten Elektroantriebsystems (22, 32) zu überwachen und die Energieflüsse zwischen dem ersten und dem zweiten Elektroantriebssystem (22, 32) zu steuern, und von dem das erste und das zweite Elektroantriebssystem (22, 32) geregelt werden;
wobei der erste und der zweite Batteriesatz (22C, 32C) miteinander durch die Verbindungsschaltung (40A) verbunden sind, und das Steuersystem (50) dazu konfiguriert ist, die Energieflüsse von dem ersten Batteriesatz (22C) zu dem zweiten Batteriesatz (32C) zu regulieren, um den zweiten Batteriesatz (32C) unter Verwendung der Spannung des ersten Batteriesatzes (22C) aufzuladen und umgekehrt.

2. Zementlastwagen (10) nach Anspruch 1, wobei die Arbeitsspannungen des ersten und des zweiten Batteriesatzes (22C, 32C) voneinander unterschiedlich sind, und die elektrischen Verbindungsmittel (40) mindestens einen DC/DC-Wandler (40B) umfassen.

3. Zementlastwagen (10) nach Anspruch 1, wobei die elektrischen Verbindungsmittel (40) mindestens einen Batteriesatz (40C) umfassen, der das erste Elektroantriebssystem (22) und/oder das zweite Elektroantriebssystem (32) bestromen kann.

4. Zementlastwagennach einem der Ansprüche 1 bis 3, wobei ein KERS-System (23) vorhanden ist, und wobei das Steuersystem (50) dazu konfiguriert ist, die Energie, die von dem KERS erhalten wird zu einem und/oder dem anderen der Elektroantriebssysteme (22, 32) zu verteilen.

5. Verfahren zum Steuern des Betriebs eines Zementlastwagens (10), der ein Kraftfahrzeug (20) und eine Trommeleinrichtung (30) umfasst, die durch Verbindungsmittel verbunden sind; wobei das Kraftfahrzeug (20) ein Fahrzeug (21) und mindestens ein erstes Antriebssystem (22) zum Antreiben des Fahrzeugs (21) umfasst;
- die Trommeleinrichtung (30) eine rotierende Trommel (31) und mindestens ein zweites Antriebssystem (32) zum Antreiben der rotierenden Trommel (31) umfasst;
- die Verbindungsmittel mindestens ein elektrisches Verbindungsmittel (40) umfassen;
wobei vorgesehen ist, dass
- das erste Antriebssystem (22) des Fahrzeugs (21) ein erstes Elektroantriebssystem (22) ist, das mindestens einen ersten Batteriesatz (22C) umfasst;
- das zweite Antriebssystem (32) der rotierenden Trommel (31) ein zweites Elektroantriebssystem (32) ist, das mindestens einen zweiten Batteriesatz (32C) umfasst;
- die elektrischen Verbindungsmittel (40) mindestens eine Verbindungsschaltung (40A) umfassen, die das erste und das zweite Elektroantriebssystem (22, 32) verbindet, und dass ein Steuersystem (50) die Energieflüsse zwischen dem ersten und dem zweiten Elektroantriebssystem (22, 32) überwacht und steuert;
wobei der erste und der zweite Batteriesatz (22C, 32C) miteinander durch die Verbindungsschaltung (40A) verbunden sind;
und wobei das Steuersystem (50) die Energieflüsse von dem ersten Batteriesatz (22C) zu dem zweiten Batteriesatz (32C) reguliert und überwacht, indem der zweite Batteriesatz (32C) unter Verwendung der Spannung des ersten Batteriesatzes (22C) aufgeladen wird und umgekehrt.

6. Verfahren nach Anspruch 5, wobei das Steuersystem (50) einen Stromfluss von dem ersten Batteriesatz (22C) zu dem zweiten Batteriesatz (32C) aktiviert, um den zweiten Batteriesatz (32C) aufzuladen, wenn der Ladepegel des zweiten Batteriesatzes (32C) unter einen programmierten Wert fällt.

7. Verfahren nach Anspruch 5, wobei das Steuersystem (50) einen Stromfluss von dem zweiten Batteriesatz (32C) zu dem ersten Batteriesatz (22C) aktiviert, um den ersten Batteriesatz (22C) aufzuladen, wenn der Ladepegel des ersten Batteriesatzes (22C) unter einen programmierten Wert fällt.

8. Verfahren nach Anspruch 5, wobei das Steuersystem (50) einen Stromfluss von dem ersten Batteriesatz (22C) zu dem zweiten Batteriesatz (32C) aktiviert, um den zweiten Batteriesatz (32C) aufzuladen, falls der Ladepegel des zweiten Batteriesatzes (32C) niedriger ist als ein programmierter Wert, beispielsweise niedriger als 40 %, und der Ladepegel des ersten Batteriesatzes (22C) nicht niedriger ist als ein programmierter Wert, beispielsweise nicht weniger als 60 %, wenn die rotierende Trommel (31) in Betrieb ist und das Fahrzeug (21) stillsteht.

9. Verfahren nach Anspruch 5, wobei das Steuersystem (50) einen Stromfluss von dem ersten Batteriesatz (22C) zu dem zweiten Batteriesatz (32C) aktiviert, um den zweiten Batteriesatz (32C) aufzuladen, wenn der Ladepegel des ersten Batteriesatzes (22C) höher ist als ein programmierter Wert, beispielsweise höher als 80 %, wenn der erste Batteriesatz (22C) mit einem externen Stromnetz verbunden ist, um aufgeladen zu werden.

10. Verfahren nach Anspruch 5, wobei das Steuersystem (50) einen Stromfluss von dem ersten Batteriesatz (22C) zu dem zweiten Batteriesatz (32C) aktiviert, um den zweiten Batteriesatz (32C) aufzuladen, falls der Ladepegel des ersten Batteriesatzes (22C) höher ist als ein programmierter Wert, beispielsweise höher als 60 %, und der Ladepegel des zweiten Batteriesatzes (32C) niedriger ist als ein anderer programmierter Wert, beispielsweise bei 40 %, wenn der erste und der zweite Batteriesatz (22C, 32C) mit einem externen Stromnetz verbunden sind, um aufgeladen zu werden.

11. Verfahren nach Anspruch 5, wobei das Steuersystem (50) einen Stromfluss von dem ersten Batteriesatz (22C) zu dem zweiten Batteriesatz (32C) aktiviert, um den zweiten Batteriesatz (32C) aufzuladen, falls der Höchstwert des Stroms, der zu dem zweiten Batteriesatz (32C) zugeführt wird, 95 % eines programmierten Werts über einen vorbestimmten Zeitintervall, beispielsweise länger als 30 Sekunden, überschreitet.

12. Verfahren nach Anspruch 5 für einen Zementlastwagen (10), der ein KERS-System (23) umfasst, wobei während der KERS-Schritte das Steuersystem (50) einen Stromfluss von dem ersten Batteriesatz (22C) zu dem zweiten Batteriesatz (32C) aktiviert, um den zweiten Batteriesatz (32C) aufzuladen, falls der Ladepegel des ersten Batteriesatzes (22C) höher ist als ein programmierter Wert, beispielsweise höher als 70 %, und die rotierende Trommel (31) in Betrieb ist.

13. Verfahren nach Anspruch 5 für einen Zementlastwagen (10), der ein KERS-System (23) umfasst, wobei während der KERS-Schritte das Steuersystem (50) einen Stromfluss von dem ersten Batteriesatz (22C) zu dem zweiten Batteriesatz (32C) aktiviert, um den zweiten Batteriesatz (32C) aufzuladen, falls der Ladepegel des ersten Batteriesatzes (22C) höher ist als ein programmierter Wert, beispielsweise höher als 80 %, und die rotierende Trommel (31) stillsteht.

## Revendications

1. Camion malaxeur de ciment (10) comprenant un véhicule à moteur (20) et un ensemble de tambour (30) reliés par des moyens de connexion ; dans lequel
- ledit véhicule à moteur (20) comprend un véhicule (21) et au moins un premier système d'entraînement (22) pour entraîner le véhicule (21) ;
- ledit ensemble de tambour (30) comprend un tambour rotatif (31) et au moins un second système d'entraînement (32) pour entraîner le tambour rotatif (31) ;
- lesdits moyens de connexion comprennent au moins des moyens de connexion électrique (40) ; dans lequel
- le premier système d'entraînement (22) du véhicule (21) est un premier système d'entraînement électrique (22) comprenant au moins un premier ensemble de batterie (22C) ;
- le second système d'entraînement (32) du tambour rotatif (31) est un second système d'entraînement électrique (32) comprenant au moins un second ensemble de batterie (32C) ;
- les moyens de connexion électrique (40) comprennent au moins un circuit de connexion (40A) qui connecte le premier et le second système d'entraînement électrique (22, 32) ;
ledit camion malaxeur de ciment comprenant également au moins un système de commande (50) configuré pour surveiller le fonctionnement des premier et second systèmes d'entraînement électriques (22, 32) et pour gérer les flux d'énergie entre le premier et le second système d'entraînement électrique (22, 32), et par lequel le premier et le second système d'entraînement électrique (22, 32) sont commandés ;
dans lequel les premier et second ensembles de batterie (22C, 32C) sont connectés l'un à l'autre par le circuit de connexion (40A), et le système de commande (50) est configuré pour réguler les flux d'énergie du premier ensemble de batterie (22C) vers le second ensemble de batterie (32C) afin de recharger le second ensemble de batterie (32C) en utilisant la tension du premier ensemble de batterie (22C), et vice versa.

2. Camion malaxeur de ciment (10) selon la revendication 1, dans lequel les tensions de fonctionnement des premier et second ensembles de batterie (22C, 32C) sont différentes l'une de l'autre, et les moyens de connexion électrique (40) comprennent au moins un convertisseur CC/CC (40B).

3. Camion malaxeur de ciment (10) selon la revendication 1, dans lequel les moyens de connexion électrique (40) comprennent au moins un ensemble de batterie (40C) qui peut alimenter le premier système d'entraînement électrique (22) et/ou le second système d'entraînement électrique (32).

4. Camion malaxeur de ciment selon l'une quelconque des revendications 1 à 3, dans lequel il existe un système SREC (23), et dans lequel le système de commande (50) est configuré pour distribuer l'énergie obtenue par le SREC à l'un et/ou à l'autre desdits systèmes d'entraînement électriques (22, 32).

5. Procédé de commande du fonctionnement d'un camion malaxeur de ciment (10) comprenant un véhicule à moteur (20) et un ensemble de tambour (30) reliés par des moyens de connexion ; dans lequel ledit véhicule à moteur (20) comprend un véhicule (21) et au moins un premier système d'entraînement (22) pour entraîner le véhicule (21) ;
- ledit ensemble de tambour (30) comprend un tambour rotatif (31) et au moins un second système d'entraînement (32) pour entraîner le tambour rotatif (31) ;
- lesdits moyens de connexion comprennent au moins des moyens de connexion électrique (40) ; dans lequel il est prévu que
- le premier système d'entraînement (22) du véhicule (21) est un premier système d'entraînement électrique (22) comprenant au moins un premier ensemble de batterie (22C) ;
- le second système d'entraînement (32) du tambour rotatif (31) est un second système d'entraînement électrique (32) comprenant au moins un second ensemble de batterie (32C) ;
- les moyens de connexion électrique (40) comprennent au moins un circuit de connexion (40A) qui connecte le premier et le second système d'entraînement électrique (22, 32) et un système de commande (50) surveille et gère les flux d'énergie entre le premier et le second système d'entraînement électrique (22, 32) ;
dans lequel les premier et second ensembles de batterie (22C, 32C) sont connectés l'un à l'autre par le circuit de connexion (40A) ;
et dans lequel
le système de commande (50) régule et surveille le flux d'énergie depuis le premier ensemble de batterie (22C) vers le second ensemble de batterie (32C), rechargeant le deuxième ensemble de batterie (32C) en utilisation la tension du premier ensemble de batterie (22C), et vice versa.

6. Procédé selon la revendication 5, dans lequel le système de commande (50) active une circulation de courant depuis le premier ensemble de batterie (22C) vers le second ensemble de batterie (32C) pour recharger le second ensemble de batterie (32C), lorsque le niveau de charge du second ensemble de batterie (32C) passe en dessous d'une valeur programmée.

7. Procédé selon la revendication 5, dans lequel le système de commande (50) active une circulation de courant depuis le deuxième ensemble de batterie (32C) vers le premier ensemble de batterie (22C) pour recharger le premier ensemble de batterie (22C), lorsque le niveau de charge du premier ensemble de batterie (22C) passe en dessous d'une valeur programmée.

8. Procédé selon la revendication 5, dans lequel le système de commande (50) active une circulation de courant depuis le premier ensemble de batterie (22C) vers le second ensemble de batterie (32C) pour recharger le second ensemble de batterie (32C) si le niveau de charge du second ensemble de batterie (32C) est inférieur à une valeur programmée, par exemple inférieur à 40 %, et que le niveau de charge du premier ensemble de batterie (22C) n'est pas inférieur à une valeur programmée, par exemple n'est pas inférieur à 60 %, lorsque le tambour rotatif (31) est en train de fonctionner et que le véhicule (21) est stationnaire.

9. Procédé selon la revendication 5, dans lequel le système de commande (50) active une circulation de courant depuis le premier ensemble de batterie (22C) vers le second ensemble de batterie (32C) pour recharger le second ensemble de batterie (32C) si le niveau de charge du premier ensemble de batterie (22C) est supérieur à une valeur programmée, par exemple supérieur à 80 %, lorsque le premier ensemble de batterie (22C) est connecté à un réseau d'alimentation électrique externe afin d'être rechargé.

10. Procédé selon la revendication 5, dans lequel le système de commande (50) active une circulation de courant depuis le premier ensemble de batterie (22C) vers le second ensemble de batterie (32C) pour recharger le second ensemble de batterie (32C) si le niveau de charge du premier ensemble de batterie (22C) est supérieur à une valeur programmée, par exemple supérieur à 60 %, et que le niveau de charge du deuxième ensemble de batterie (32C) est inférieur à une autre valeur programmée, par exemple à 40 %, lorsque les premier et deuxième ensembles de batterie (22C, 32C) sont connectés à un réseau d'alimentation électrique externe afin d'être rechargés.

11. Procédé selon la revendication 5, dans lequel le système de commande (50) active une circulation de courant depuis le premier ensemble de batterie (22C) vers le second ensemble de batterie (32C) pour recharger le second ensemble de batterie (32C) si la valeur maximale du courant fourni par le second ensemble de batterie (32C) dépasse 95 % d'une valeur programmée, pendant un intervalle de temps prédéterminé, par exemple supérieur à 30 secondes.

12. Procédé selon la revendication 5, pour un camion malaxeur de ciment (10) comprenant un système SREC (23), dans lequel pendant les étapes du SREC le système de commande (50) active une circulation de courant depuis le premier ensemble de batterie (22C) vers le second ensemble de batterie (32C) pour recharger le second ensemble de batterie (32C), si le niveau de charge du premier ensemble de batterie (22C) est supérieur à une valeur programmée, par exemple supérieur à 70 %, et que le tambour rotatif (31) est en train de fonctionner.

13. Procédé selon la revendication 5, pour un camion malaxeur de ciment (10) comprenant un système SREC (23), dans lequel pendant les étapes du SREC le système de commande (50) active une circulation de courant depuis le premier ensemble de batterie (22C) vers le second ensemble de batterie (32C) pour recharger le second ensemble de batterie (32C), si le niveau de charge du premier ensemble de batterie (22C) est supérieur à une valeur programmée, par exemple supérieur à 80 %, et que le tambour rotatif (31) est stationnaire.
